## Europäisches Patentamt
## European Patent Office
## Office européen des brevets

(19)

(11) Veröffentlichungsnummer: **0 023 536**
**B1**

(12)

# EUROPÄISCHE PATENTSCHRIFT

(45) Veröffentlichungstag der Patentschrift:
24.03.82

(51) Int. Cl.³: **B 60 J 3/02**

(21) Anmeldenummer: **80102489.4**

(22) Anmeldetag: **07.05.80**

(54) Sonnenblende für Fahrzeuge mit einem im Sonnenblendenkörper angeordneten Spiegel.

(30) Priorität: **01.08.79 DE 7921916 U**

(43) Veröffentlichungstag der Anmeldung:
**11.02.81 Patentblatt 81/6**

(45) Bekanntmachung des Hinweises auf die Patenterteilung:
**24.03.82 Patentblatt 82/12**

(84) Benannte Vertragsstaaten:
**DE FR GB IT SE**

(56) Entgegenhaltungen:
**DE-A1-2 530 111**
**DE-A1-2 730 926**
**DE-U-7 533 246**
**DE-U-7 900 312**

(73) Patentinhaber: **Gebr. Happich GmbH,**
**Postfach 10 02 49 Clausenbrücke 1,**
**D-5600 Wuppertal 1 (DE)**

(72) Erfinder: **Kaiser, Klaus-Peter, Sellscheid 42,**
**D-5632 Wermelskirchen (DE)**
Erfinder: **Viertel, Lothar, V. Gartenreihe 48,**
**D-6630 Saarlouis (DE)**

Sonnenblende für Fahrzeuge mit einem im Sonnenblendenkörper angeordneten Spiegel

Die Erfindung betrifft eine Sonnenblende für Fahrzeuge mit einem im Sonnenblendenkörper angeordneten Spiegel, der in einem durch eine ein- und ausschaltbare Lichtquelle hinterleuchteten durchlässigen Rahmen sitzt. Eine solche Vorrichtung ist aus der DE-A-2 730 926 bekannt.

Es ist auch bereits bekannt, die Abdeckklappen von Abdeckungen der Spiegel in Sonnenblenden einem eigenen Rahmen zuzuordnen und den Rahmen über eine Klipsverbindung mit dem Sonnenblendenkörper oder aber mit dem Rahmen des Spiegels zu verbinden. Die Klipsverbindung erfolgt dabei an der Rahmenöffnung des Spiegelrahmens, der dabei nach aussen völlig abgedeckt wird (DE-U-7 900 312). Ein solcher Konstruktionsaufbau ist relativ einfach und weist auch sonst keinerlei Schwierigkeiten auf, so dass eine derartige Spiegelabdeckung schon bei den meisten Fahrzeugen, insbesondere denen der Ober- und Mittelklasse, zu finden ist.

Schwierigkeiten, die überwunden werden müssen, bestehen aber bei beleuchteten Sonnenblenden-Spiegeln, deren Spiegel von einem Leuchtrahmen umgeben ist; so darf der Leuchtrahmen nicht oder nur geringflächig abgedeckt werden, weil sonst die Lichtwirkung zu stark herabgesetzt wird. Auch muss die Befestigung herstellungstechnisch einfach, sicher und dauerhaft haltend ausgebildet werden. Dazu ist anzuführen, dass gerade die Verbindung des Abdeckrahmens, der fast immer aus einem elastischen, thermoplastischen Material besteht, besonders schwierig ist, weil er bei der zweckmässigen einstückigen und materialeinheitlichen Ausbildung der Verbindung der Flügelklappe mit dem Rahmen durch ein Filmscharnier unbedingt aus elastischem Material bestehen muss. Die Verbindung mit dem optische Werte aufweisenden lichtdurchlässigen, aus hartem Material bestehenden Rahmen weist ausserdem besondere Probleme auf.

Generell besteht die Aufgabe der Erfindung in der Abdeckung von Sonnenblenden-Spiegeln, die mit einem Leuchtrahmen versehen sind, um auch hier den Spiegel und zusätzlich den Leuchtrahmen zu schützen, insbesondere einen Unfallschutz bei splitterndem Silikat-Spiegel sicherzustellen.

Die Aufgabe wird ausgehend von der eingangs genannten Sonnenblende erfindungsgemäss durch die im kennzeichnenden Teil des Anspruchs 1 aufgeführten Merkmale gelöst. Dadurch ist ein allgemeiner Schutz des Spiegels und auch des lichtdurchlässigen Spiegelrahmens gebildet, wobei der allgemeine sichere Unfallschutz besonders hervorzuheben ist.

Eine Klipsverbindung ist eine besonders einfache und von anderen Verbindungen bei Sonnenblenden-Teilen ableitbar ausreichend sichere Befestigung, bei der Klebematerial und der entsprechende Verfahrensgang eingespart werden.

Die Lichtausbeute des lichtdurchlässigen Rahmens wird somit nur unwesentlich verringert; denn durch diese Ausbildung kann die abgedeckte Fläche des lichtdurchlässigen Rahmens äusserst klein sein, und der aussen umlaufende Rahmen der Abdeckung kann schmal gehalten werden, weil er durch die übergreifende Ausbildung um den statisch festen Rahmen eine besonders grosse, zusätzliche Stabilität erhält.

Es ist sogar möglich, die Lichtausbeute voll zu erhalten, wenn der Rahmen der Abdeckung aus lichtdurchlässigem Material gefertigt ist und eine lichtundurchlässige Abdeckklappe aufweist. Hierdurch wird die Fläche des lichtdurchlässigen Rahmens nicht durch lichtundurchlässiges Material abgedeckt, so dass die volle Ausleuchtung erhalten bleibt oder sogar erhöht wird, wenn nämlich der lichtdurchlässige Rahmen der Abdeckklappe optische Werte aufweist. Mit der Ausbildung der gesamten Abdeckung aus lichtdurchlässigem Material, wobei die Abdeckklappe durch eine aufgetragene Schicht lichtundurchlässig gestaltet ist, ist eine wesentliche Konstruktionsvereinfachung erreicht, insbesondere weil Rahmen und Klappe einstückig und materialeinheitlich gefertigt werden können.

Die einstückige und materialeinheitliche Konstruktion lässt sich besonders einfach verwirklichen, wenn die Scharnierausbildung ein Filmscharnier ist, dessen Lappen mit dem Rahmen und der Abdeckung integriert sind bzw. lappenlos in den Rahmen und/oder die Abdeckklappe übergehen.

Auch ist es von Vorteil, wenn zumindest eine Flügelstellung der Abdeckklappe, insbesondere die den Spiegel abdeckende Stellung, durch eine wiederholt lösbare Arretierausbildung festlegbar ausgebildet ist. Auf diese Weise ist es möglich, die Scharnierausbildung untenliegend am Rahmen anzuordnen, wodurch eine Aufhaltevorrichtung für die Klappe entfallen kann, weil ja die Klappe durch ihr Eigengewicht in der Offenstellung verbleibt. Dabei kann als einfach und sicher funktionierende Arretierausbildung ein Schnäpper oder eine Klipsleiste der Abdeckklappe zugeordnet werden.

Auch kann in an sich bekannter Weise die Schalterbestätigung vorgenommen werden, indem der Schalter für die Schalterbetätigung der Lichtquelle mit einem Schaltknopf bzw. Schaltschieber im Bereich der Abdeckklappe angeordnet ist und die Ausschaltstellung durch Anlage des Schaltknopfes bzw. des Schaltschiebers an der Innenseite der Abdeckklappe in ihrer geschlossenen Stellung gesichert ist.

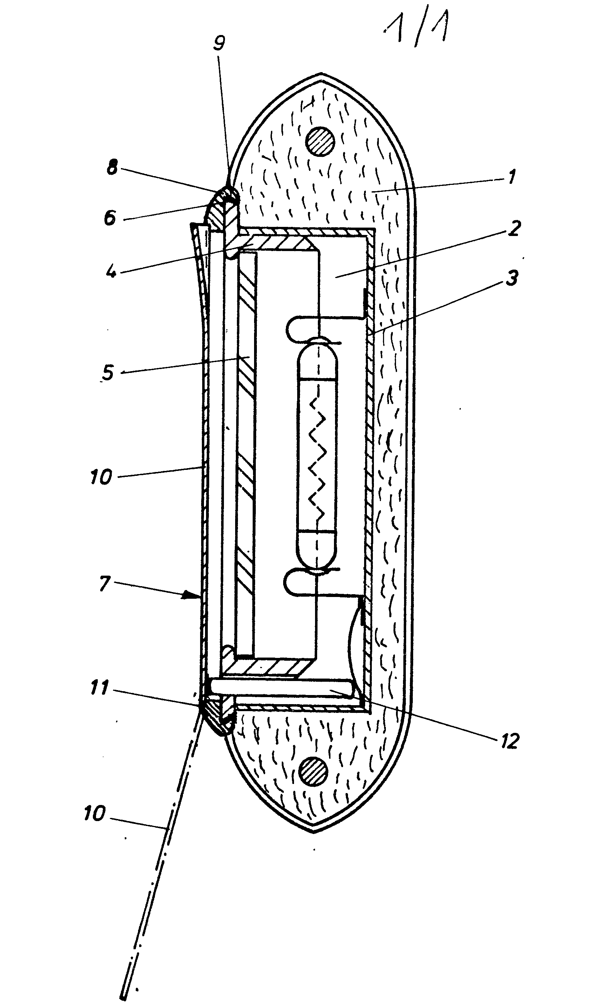

Auf der Zeichnung ist die Erfindung in einem Ausführungsbeispiel wiedergegeben. Die einzige Figur zeigt einen vertikalen Schnitt durch einen Sonnenblendenkörper 1, der eine zu einer Breitfläche hin offene kammerförmige Aussparung 2 besitzt, in welcher ein rechteckiger Kasten 3 angeordnet ist. Der Kasten 3 wird bei der Herstellung des Sonnenblendenkörpers 1 zweckmässigerweise mit eingeschäumt und haltert zweckmässig den Spiegelrahmen 4, beispielsweise mittels nicht dargestellter Klipse. Das Rahmenprofil ist T-förmig ausgebildet und demnach mit dem innenliegenden Winkel geeignet, einen Spiegel 5 sicher auszunehmen. Der Sonnenblendenkörper 1 besitzt im Bereich der Rahmenauflage zweckmässigerweise eine Einziehung, so dass der Spiegelrahmen 4 eine versenkte Anordnung findet und praktisch bündig mit der Aussenhaut des Sonnenblendenkörpers 1 abschliesst. Der Spiegelrahmen 4 besteht notwendigerweise, weil er ein Leuchtrahmen ist, aus glasklarem oder milchig eingefärbten Kunststoff, insbesondere aus Polyacrylharz oder Polycarbonat.

Die aussen umlaufende Kante vom Querbalken des im Querschnitt T-förmigen Spiegelrahmens 4 ist nach innen verlaufend abgeschrägt und bildet daher in geeigneter Weise eine Fläche für eine Klipsverbindung, mit der die Abdeckung 7 mit ihrem Rahmen 8 aufgeklipst ist. Die mit der Fläche 6 kompensierende Klipsfläche des Deckelrahmens 8 ist mit 9 bezeichnet.

Die Abdeckung 7 besteht ausser dem Deckelrahmen 8 aus der Abdeckklappe 10, die über ein Filmscharnier 11 untereinander einstückig und materialeinheitlich verbunden sind. Die Abdeckklappe 10 ist deshalb eine Flügelklappe mit einer nach unten gerichteten Offenstellung. Auf diese Weise entfällt eine besondere Aufhaltevorrichtung für die Offenstellung der Abdeckklappe 10. Die Schliessstellung kann unterschiedlich gesichert sein; zweckmässig ist eine Schnäppereinrastung, die jedoch wegen der generellen Bekanntheit nicht mit dargestellt ist.

Für die Betätigung des Schaltkontaktes ist ein Druckschalter 12 vorgesehen, welcher bei geschlossener Abdeckklappe 10 eine Unterbrechungsstellung einnimmt und bei geöffneter Abdeckklappe 10 in Schliessstellung der elektrischen Kontakte übergeht.

**Patentansprüche**

1. Sonnenblende für Fahrzeuge mit einem im Sonnenblendenkörper (1) angeordneten Spiegel (5), der in einem durch eine ein- und ausschaltbare Lichtquelle hinterleuchteten, lichtdurchlässigen Spiegelrahmen (4) sitzt, gekennzeichnet durch eine vom lichtdurchlässigen Spiegelrahmen (4) gehaltene und diesen durch eine Klipsverbindung übergreifende Abdeckung (7), die aus einem Deckelrahmen (8) besteht, dem an einer Kante eine durch eine Scharnierausbildung (11) mit dem Deckelrahmen (8) verbundene Abdeckklappe (10) zugeordnet ist, wobei die Klipsverbindung gebildet wird aus einer ersten am Spiegelrahmen (4) aussen umlaufend und nach innen abgeschrägt ausgebildeten Fläche (6) und einer diese hintergreifenden zweiten Fläche (9), die an der Innenseite des Deckelrahmens (8) ausgebildet ist.

2. Sonnenblende nach Patentanspruch 1, dadurch gekennzeichnet, dass der Deckelrahmen (8) der Abdeckung (7) aus lichtdurchlässigem Material gefertigt ist und eine lichtundurchlässige Abdeckklappe (10) aufweist.

3. Sonnenblende nach Patentanspruch 1, dadurch gekennzeichnet, dass die gesamte Abdeckung (7) aus einem lichtdurchlässigen Material besteht und und die Abdeckklappe (10) durch eine aufgetragene Schicht lichtundurchlässig gestaltet ist.

4. Sonnenblende nach Patentanspruch 1, dadurch gekennzeichnet, dass die Scharnierausbildung ein Filmscharnier (11) ist, dessen Lappen mit dem Deckelrahmen (8) und der Abdeckklappe (10) integriert sind bzw. lappenlos in den Deckelrahmen (8) und/oder die Abdeckklappe (10) übergehen.

5. Sonnenblende nach Patentanspruch 1 oder 4, dadurch gekennzeichnet, dass zumindest eine Flügelstellung der Abdeckklappe (10), insbesondere die den Spiegel (5) abdeckende Stellung, durch eine wiederholt lösbare Arretierausbildung festlegbar ausgebildet ist.

6. Sonnenblende nach Patentanspruch 5, dadurch gekennzeichnet, dass die Arretierausbildung ein Schnäpper oder eine Klipsleiste ist.

7. Sonnenblende nach einem oder mehreren der vorangehenden Patentansprüche, dadurch gekennzeichnet, dass der Schalter (12) für die Schalterbetätigung der Lichtquelle mit einem Schaltknopf bzw. Schaltschieber im Bereich der Abdeckklappe (10) liegt und die Ausschaltstellung durch Anlage des Schaltknopfes bzw. des Schaltschiebers an der Innenseite der Abdeckklappe (10) in ihrer geschlossenen Stellung gesichert ist.

**Revendications**

1. Pare-soleil pour véhicules automobiles, comprenant un miroir (5) monté dans le corps (1) du pare-soleil et fixé dans un cadre (4) transparent éclairé par l'arrière par une source lumineuse pouvant être allumée et éteinte, caractérisé par un élément de recouvrement (7) maintenu par le cadre transparent (4) du miroir et recouvrant ce dernier auquel il se fixe par une liaison par encliquetage, l'élément de recouvrement étant constitué par un cadre (8) du couvercle qui est associé par un rebord à un volet de recouvrement (10) relié au cadre (8) du couvercle par l'intermédiaire d'un dispositif à charnière (11), la liaison par encliquetage étant constituée par une première surface (6) en biseau vers l'intérieur et entourant le cadre (4) du miroir par l'extérieur et une seconde surface (9) s'engageant derrière la première et constituée sur le côté interne du cadre (8) du couvercle.

2. Pare-soleil selon la revendication 1, caractérisé en ce que le cadre (8) de l'élément de recouvrement (7) est réalisé en un matériau transparent et comprend un volet de fermeture opaque (10).

3. Pare-soleil selon la revendication 1, caractérisé en ce que l'ensemble de l'élément de recouvrement (7) est constitué en un matériau transparent et en ce que le volet de recouvrement (10) est rendu opaque au moyen d'une couche appliquée sur lui.

4. Pare-soleil selon la revendication 1, caractérisé en ce que la charnière est constituée par un film (11) dont les pattes sont intégrées au cadre (8) et au volet de recouvrement (10), ou bien se prolongeant sans pattes dans le cadre (8) du couvercle et/ou dans le volet de recouvrement (10).

**0 023 536**

5. Pare-soleil selon l'une des revendications 1 ou 4, caractérisé en ce qu'au moins une position du volet de recouvrement (10) et en particulier la position dans laquelle il recouvre le miroir (5) est assurée par un dispositif de blocage pouvant être immobilisé et dégagé de façon répétée.

6. Pare-soleil selon la revendication 5, caractérisé en ce que le dispositif de blocage est un dispositif d'encliquetage ou une baguette d'enclenchement.

7. Pare-soleil selon l'une quelconque ou plusieurs des revendications 1 à 6, caractérisé en ce que le commutateur (12) qui commande la source lumineuse, avec un bouton ou un poussoir de commutation, est disposé dans la région du volet de recouvrement (10), la position de coupure étant déterminée par l'application du bouton ou du poussoir de commutation contre le côté intérieur du volet de recouvrement (10) quand il est en position fermée.

**Claims**

1. A sun visor for vehicles having a mirror (5) arranged in the body (1) of the sun visor and mounted in a light-permeable mirror frame (4) which is illuminated at the rear by a light source which can be switched on and off, characterized by a cover (7) which is held by the light-permeable mirror frame (4) and overlies the latter with the aid of a snap connection and which comprises a cover frame (8), with which is associated, at one edge thereof, a cover flap (10) connected to the cover frame (8) by a hinge arrangement (11), the snap connection being formed by an externally-extending, inwardly-bevelled, first face (6) on the mirror frame (4) and by a second face (9) which snaps underneath the first face and is formed on the inside of the cover frame (8).

2. A sun visor according to claim 1, characterized in that the cover frame (8) of the cover (7) is made of light-permeable material and has a light-impermeable cover flap (10).

3. A sun visor according to claim 1, characterized in that the entire cover (7) is made of a light-permeable material, and the cover flap (10) is rendered impermeable to light by a coating applied thereto.

4. A sun visor according to claim 1, characterized in that the hinge arrangement is a hinge (11) of film material which has tabs integral with the cover frame (8) and the cover flap (10) or which is joined, without tabs, to the cover frame (8) and/or the cover flap (10).

5. A sun visor according to claim 1 or claim 4, characterized in that at least one setting of the cover flap (10), preferably the setting for covering the mirror (5), is established by a repeatedly-releasable immobilizing means.

6. A sun visor according to claim 5, characterized in that the immobilizing means is a snap fastening or a clip surface.

7. A sun visor according to any one or more of the preceding claims, characterized in that a switch (12) for actuating the light source comprises a switch button or switch slide located in the region of the cover flap (10), and the off position is ensured by causing the switch button or switch slide to bear against the inside of the cover flap (10) in its closed position.

1/1